# EUROPEAN PATENT SPECIFICATION

(11) **EP 1 445 495 B1**
(45) Date of publication and mention of the grant of the patent: **29.11.2006**
(21) Application number: 03029150.4
(22) Date of filing: 18.12.2003
(51) Int. Cl.: F16B 5/02, F16B 43/00, F16F 1/40, F16F 7/12

(54) **Engineered flexure component**
Flexibles Befestigungsbauteil
Dispositif de fixation flexible

(30) Priority: 18.12.2002 US 323460
(43) Date of publication of application: 11.08.2004
(73) Proprietor: Goodrich Corporation, Charlotte, North Carolina 28217 (US)
(72) Inventor: Hachkowski, Michael Roman, Ridgefield Connecticut 06877 (US)
(74) Representative: Gervasi, Gemma

(56) References cited:
- GB-A- 2 173 569
- US-A- 6 022 178
- US-A1- 2002 187 020
- US-B1- 6 224 288

## Description

### BACKGROUND OF THE INVENTION

### 1. Field of the Invention

This invention relates to an engineered flexure component used at the bolted interfaces of precision optical instruments.

### 2. Description of the Prior Art

For precision structures, such as telescopes, it is important to understand the sources of mechanical hysteresis, which is defined as the dependence of the strain of a material not only on the instantaneous value of the stress, but also on the previous history of the stress. It is known that whenever two structural elements are bolted together, friction exists at the bolted interface. Bolted interfaces are a source of both damping and instability. Friction may be the cause of energy dissipation as the two surfaces slide past one another as well as cause the two mating surfaces to slide and stop in a new position relative to each other.

According to US 6,022,178 there is disclosed a flexure washer bearing wherein a washer bearing in a bolt interface is provided, and comprises a first top plate, a second bottom plate, and a multiple blade assembly in between. This arrangement through providing good stiffness to the bolting interface, has the disadvantage of cannot controlling the amount of forces that act across the interface due the friction between the said plates and the blade assembly.

At present, interface designers cannot explicitly control the percentages of forces that act across an interface through friction. Currently, many optic mounts for precision optical instruments are bolted directly to an optical bench. In a high vibrational environment, the optic mounts tend to react to external forces and reposition themselves, thus causing the optical instrument to shift their position. Given the foregoing, there is a need for an engineered flexure component that is sufficiently flexible enough to bend and not slide as the mating surfaces of the bolted interface move relative to each other.

### SUMMARY OF THE INVENTION

An engineered flexure component comprising bolt flange structural members is provided with parallel grooves across its surface. One bolt flange structural member surface has grooves that run in a direction which extends from one edge to the opposite edge of staid member, while a second bolt flange structural member surface has grooves that run in a direction which extends from one edge to the opposite edge of said member, such that they are perpendicular to the grooves of the first bolt flange mating surface. The purpose of the grooves is to create a surface that consists of flexures. These flexures cause two effects to occur at the bolted interface. First, for a given clamping force, the resulting surface pressure is greater because of the smaller contact area at the interface which in turn increases the friction force. Second, the flexures are sufficiently flexible enough to bend and not slide as the two interface surfaces move relative to each other. The flexure points may be realized in different configurations, i.e. squares, circles, triangles, or other geometric and prismatic shapes. The grooving of the surfaces allows a designer of optical instruments to be capable of determining the stiffness of the resulting flexure as well as control the percentages of forces that are transferred across an interface through friction as compared with elastic bending. The flexured interface also allows the designer to invoke load path management design rules. In summary, load path management is a process by which a designer can control the effect of friction by not effecting the frictional mechanisms, but by changing the elastic stiffness that surrounds the frictional element. Placing grooves in the interface mating surfaces enables a designer to model the interface stiffness as a series of bending beams, which in turn allows the designer to explicitly model the percentage of force that acts through friction.

### BRIEF DESCRIPTION OF THE DRAWINGS

Fig. 1 is a perspective view of the engineered flexure component of the present invention;
Fig. 2 is a perspective view of an alternative embodiment to the engineered flexure component of Fig. 1;
Fig. 3 is an exploded view of a flexured assembly utilizing the embodiment shown in Fig.1;
Fig. 4 is an exploded view of a flexured assembly utilizing the alternative embodiment shown in Fig. 2;
Fig. 5 is a model showing the force transfer in both the conservative and non-conservative load paths that may exist at the interface of a flexured assembly and
Fig. 6 is an illustration of the load paths that exist across the interface of a flexured assembly.

### DETAILED DESCRIPTION OF THE DRAWINGS

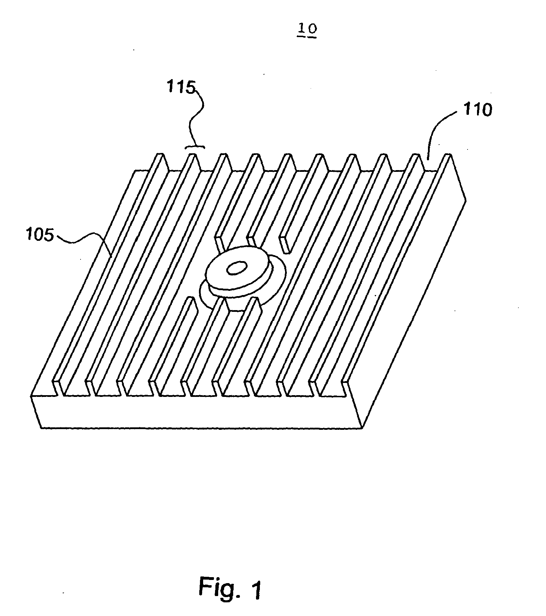

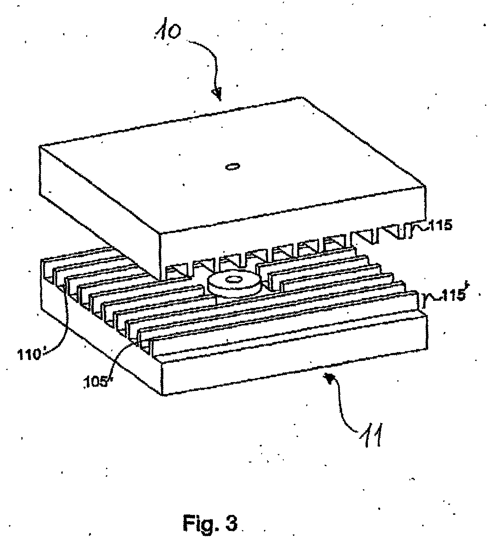

Referring to the drawings, and in particular, Fig. 1, there is provided an engineered flexure component comprising a first bolt flange shaped as a structural member 10 having a front surface 105. Bolt flange 10 is provided with parallel grooves 110 which transverse front surface 105. As shown in Fig. 1, grooves 110 transverse front surface 105 in a vertical direction which extends from one edge to the opposite edge of said member 10. As shown in Fig. 3, the flexure component of the present invention further comprises a front surface 105' of a second bolt flange structural member 11 having grooves 110' which transverse front surface 105' in a direction which extends from one edge to the opposite edge of said member 11, the arrangement is such that they are perpendicular to grooves 110 of the first bolt flange member 10 front surface 105 when the first and second bolt flange members 10 and 11 are bolted together, creating an interface.

The purpose of grooves 110, 110' is to create a flexure 115, 115'. Flexures 115, 115' cause two effects to occur at a bolted interface.

First, for a given clamping force, the resulting surface pressure is greater because of the smaller contact area at the interface which in turn increases the coulombic friction force.

Second, flexures 115, 115' provide additional flexibility such that the percentage of force transmitted across the interface is reduced. The width and height of flexures 115, 115' is determined by the flexure bending stiffness, flexure axial stiffness, flexure tortional stiffness, flexure buckling limit and load path management design rules.

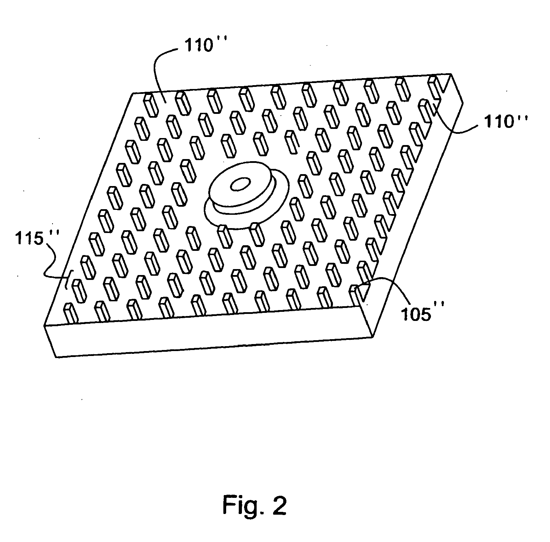

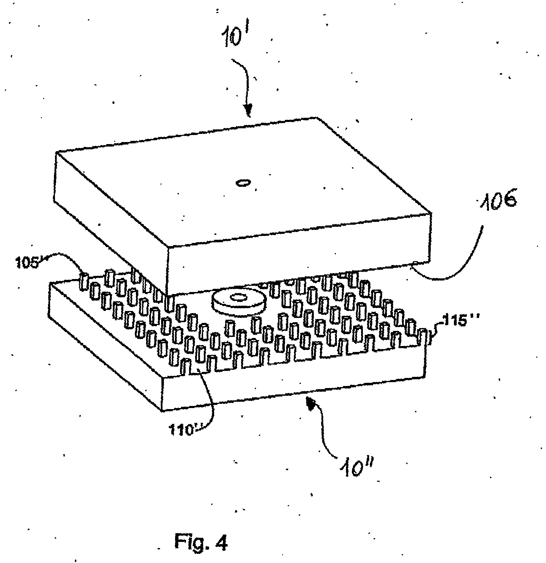

Fig. 2 is an alternative embodiment of the engineered flexure component comprising a first structural member 10" in which grooves 110" transverse front surface 105" in both directions, i.e. perpendicular to each other, creating a cross-hatched appearance. According to the present invention, the flexures consists of a plurality of prismatic pin shaped flexures (115"). As shown in Fig. 4, this embodiment is used when the flexure component consists of the bolt flange member 10" and a second member (10') having a flat, smooth surface (106).

In further alternative embodiments, the flexure points (115'') may have different prismatic configurations, i.e. squares, circles, triangles, or other geometric shapes.

Load path management theory states that it is possible to reduce or tailor the effect of interface friction by effecting the elastic mechanisms that surround the friction element. Due to the dependency that hysteresis has on the relative magnitudes of stiffness at an interface, load path management states that it is possible to reduce the dissipation due to friction at an interface not by affecting the friction mechanism, but by changing the relative magnitudes of stiffness. This can be achieved by changing the design of the interface to increase the percentage of load transferred through internal elastic mechanisms.

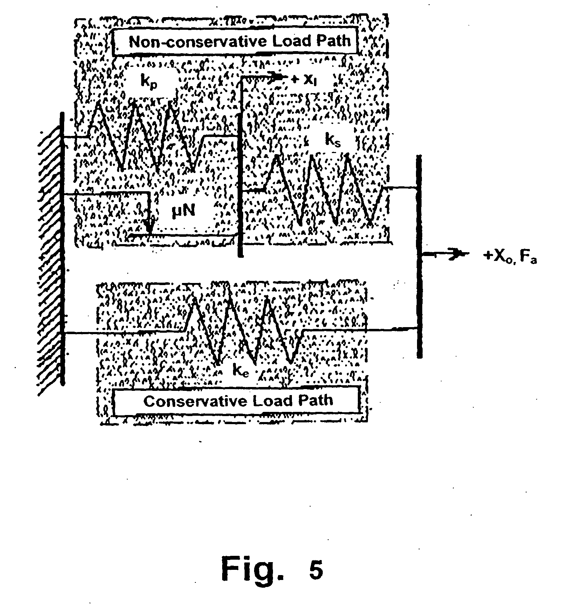

When force is transferred across a physical interface, normal and tangential stresses and local deformations occur at the interface. When load transfer occurs through normal stresses at the interface, the load path is elastic, i.e. conservative. When load transfer occurs through shear stress at the interface, friction must be present and thus slippage can occur. When load transfer occurs across friction interfaces, it is considered non-conservative. This force transfer is shown in the interface model of Fig. 5. This model is comprised of two distinct segments and is a representation of the conservative and non-conservative load paths that may exist at an interface. The conservative segment of the model represents an interface design for which there are only elastic mechanisms (other than material hysteresis) in the load path. The non-conservative segment of the model represents a combination of elastic and friction mechanisms that exist in a non-conservative load path. The hysteretic mechanism of the interface is represented by a Coulombic friction mechanism which is in parallel with a linear spring element (kₚ) as well as in series with another linear spring element (kₛ). A Coulombic friction mechanism was chosen because it represents the hysteretic mechanics that exist at an interface. A linear, elastic mechanism (kₑ) in parallel with the non-conservative load path represents the conservative load path at an interface. The analytical model of Fig. 4 represents such an interface. This interface model illustrates how an externally applied load (Fₐ) may be divided into elastic (i.e. normal) and inelastic (i.e. tangential) load path components for load transfer across the interface. The kₑ elastic element of the model represents the elastic behavior of the body from the application of the external load to normal stress at the interface. The kₛ elastic mechanism of the model represents the elastic behavior of the body from the application of the external load to shear stress at the interface. Load transfer across the interface is represented by an elastic mechanism (kₚ) in parallel with the friction mechanism ΦN. The elastic mechanism kₚ represents the portion of the shear load that is transferred across an interface elastically, i.e. regions within the contact area where slip does not occur. The friction mechanism represents the portion of the shear load that is transferred across an interface inelastically, i.e. regions within the contact area where slip does occur.

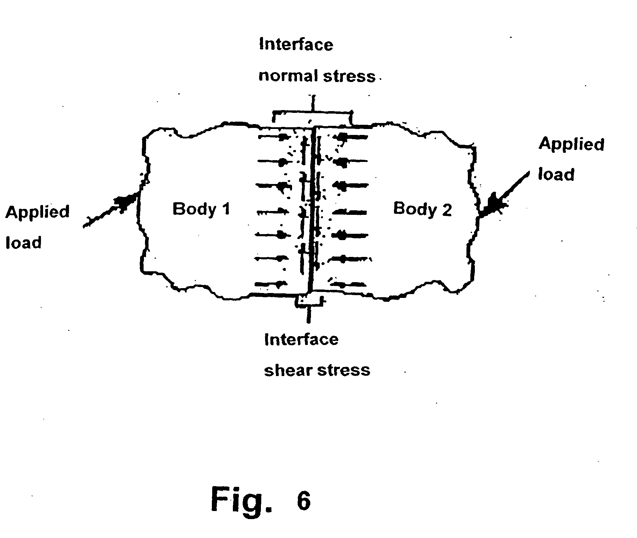

Using a loss factor analysis, it is shown that if displacement-dependent friction exists in the model shown in Fig. 6, it is possible to reduce the friction effect by changing the relative magnitudes of internal stiffness such that an ever increasing percentage of the force is transferred through internal elastic mechanisms, i.e. load path management. The engineered flexure component of the present invention involves changing the value af kₛ, the elastic spring constant associated with the elastic behavior of the body from the application of the external load to the shear stress at the interface. Reducing the spring stiffness kₛ reduces the percentage of force that acts through elastic mechanisms. This changing of the local interface between the mating surfaces of structural elements allows the mating surfaces to return to their original position because the flexure points bend, but do not slide with respect to each other.

## Claims

1. An engineered flexure component, comprising a first flat structural member (10;10") having a first surface (105; 105"), and a second flat structural member (11,10') having a second surface (105';106) and for co-operating with said first flat structural member (10; 10"), **characterised in that** at least one of said first and second surfaces (105, 105'; 105") of said first and second structural members (10,10';10", 11) comprises a plurality of grooves (110, 110', 110") integrally obtained therein, the arrangement being such that said plurality of grooves (100, 110', 110") create a plurality of prismatic flexures (115, 115', 115") having a predetermined height and width.

2. The engineered flexure component according to claim 1, wherein said plurality or grooves (110, 110") are parallel to each other.

3. The engineered flexure component according to claim 1, wherein said plurality or grooves (110, 110") completely transverse said first surface (105,105").

4. The engineered flexure component according to claim 1, wherein said plurality of flexure consist of a plurality of straight elongated flexures (115, 115') extending from a first edge to the opposite edge of said structural member (10; 11).

5. The engineered flexure component according to claim 1, wherein said plurality of flexure consist of a plurality of prismatic pin shaped flexures (115") creating a respective plurality of grooves (110") arranged in a cross-hatched arrangement onto said surface (105") of said structural member (10").

6. The engineered flexure component according to claim 1, wherein said second structural member (11) comprises straight elongated flexures (115') extending from a first edge to the opposite edge thereof, the arrangement being such that said first structural member (10) and said second structural member abut said plurality of flexures (115) respectively in a perpendicular arrangement one respect to the other for co-operating in mutual contact.

7. The engineered flexure component according to claim 1, wherein said second surface (106) of said second structural member (10') is a smooth surface with no grooves therein, the arrangement being such that said first plurality of flexure (115") of said first structural member (10") contact said second surface (106) of said second structural member (11) respectively for co-operating in mutual contact.

8. The engineered flexure component of claim 1, wherein said flexures (115, 115', 115") have a height comprised from about 6.35mm (1/4 inch) to about 25,4 (1 inch).

9. The engineered flexure component of claim 1, wherein said flexures (115, 115, 115") have a width comprised from about 3.175mm (1/8 inch) to about 25,4mm (1 inch).

10. The engineered flexure component of claim 1, wherein said flexures (115, 115', 115'') are prismatic shaped comprising the following shapes: square, circle, triangle and other geometric shapes.

11. A method for providing dimensional stability for an engineered flexure component, comprising the following steps:
(a) providing a first structural member (10, 10", 11) having a first surface (105,105",105');
(b) grooving said first surface (105,105",105') of said first structural member (10, 10", 11) to provide a plurality of grooves (110, 110', 110") creating a plurality of prismatic flexures (115,115', 115");
(c) providing a second structural member (10', 11) having a second surface (105', 106);
(d) mating said first surface of said first structural member with said second surface of said second structural member so that said plurality of flexure (115,115") abut said second surface (105', 106); and
(e) creating an interface with an increased surface pressure and reduced friction.

12. The method of claim 11, wherein said flexures (115, 115") have a height and a width predetermined by a combination of flexure bending stiffness, flexure axial stiffness, flexure tortional stiffness, flexure buckling limit and load path management design rules.

13. The method according to claim 11, wherein said step of grooving said surface (105, 105') comprises the step of creating a plurality of elongated and parallel straight flexures (115, 115') creating a respective plurality of grooves (110, 110') extending from a first edge of said first structural member (10, 11) to the opposite edge thereof.

14. The method according to claim II, wherein said step of grooving said surface (105") comprises the step of creating a plurality of flexures consisting of a plurality of prismatic **pin shaped flexures** (115") creating a respective plurality of grooves (110") arranged in a cross-hatched arrangement onto said surface (105") of said structural member (10").

15. The method according to claim 11, wherein said mating step comprises the step of mating a first surface (105) of a structural member (10) having straight elongated flexures (115) extending from a first edge to the opposite edge thereof, to a second surface (105') of a second structural member (11) having straight elongated flexures (115') extending from a first edge to the opposite edge thereof in a perpendicular arrangement one respect to the other and for co-operating in mutual contact.

16. The method according to claim 11, wherein said mating step comprises the step of mating a first surface (105") of a structural member (10") having prismatic pin shaped flexures (115") extending from a first edge to the opposite edge thereof to a second flat surface (106) of a structural member (10') for co-operating in mutual contact.

## Patentansprüche

1. Technische Biegekomponente, umfassend ein erstes flaches Strukturbauteil (10; 10") mit einer ersten Oberfläche (105; 105"), und ein zweites flaches Strukturbauteil (11, 10') mit einer zweiten Oberfläche (105'; 106), zur Kooperation mit dem ersten flachen Strukturbauteil (10; 10"), **dadurch gekennzeichnet, dass** mindestens eine der ersten und zweiten Oberflächen (105, 105'; 105") der ersten und zweiten Strukturbauteile (10, 10'; 10", 11) eine Anzahl von Rillen (110, 110', 110") aufweist, die darin eingefügt erhalten werden, wobei die Anordnung derart ist, dass die Anzahl der Rillen (100, 110', 110") eine Anzahl prismatischer Biegungen (115, 115', 115") mit festgelegter Höhe und Breite erzeugt.

2. Technische Biegekomponente nach Anspruch 1, wobei die Anzahl der Rillen (110, 110") parallel zueinander ist.

3. Technische Biegekomponente nach Anspruch 1, wobei die Anzahl der Rillen (110, 110") die erste Oberfläche (105, 105") vollständig kreuzt.

4. Technische Biegekomponente nach Anspruch 1, wobei die Anzahl der Biegungen aus einer Anzahl von geraden länglichen Biegungen (115, 115') besteht, die sich von einem ersten Rand zum gegenüberliegenden Rand des Strukturbauteils (10; 11) erstrecken.

5. Technische Biegekomponente nach Anspruch 1, wobei die Anzahl der Biegungen aus einer Anzahl prismatischer **stiftförmiger Biegungen** (115") besteht, die eine entsprechende Anzahl von Rillen (110") erzeugt, welche in schraffierter Anordnung auf der Oberfläche (105") des Strukturbauteils (10") angeordnet sind.

6. Technische Biegekomponente nach Anspruch 1, wobei das zweite Strukturbauteil (11) gerade längliche Biegungen (115') umfasst, die sich von einem ersten Rand zum gegenüberliegenden Rand erstrecken, wobei die Anordnung derart ist, dass das erste Strukturbauteil (10) und das zweite Strukturbauteil an die Anzahl von Biegungen (115) jeweils in rechtwinkliger Anordnung in Bezug auf die andere grenzen, zur Kooperation in gegenseitigem Kontakt.

7. Technische Biegekomponente nach Anspruch 1, wobei die zweite Oberfläche (106) des zweiten Strukturbauteils (10') eine glatte Oberfläche ohne Rillen darin ist, wobei die Anordnung derart ist, dass die erste Anzahl der Biegungen (115") des ersten Strukturbauteils (10") die zweite Oberfläche (106) des zweiten Strukturbauteils (11) jeweils kontaktiert, zur Kooperation in gegenseitigem Kontakt.

8. Technische Biegekomponente nach Anspruch 1, wobei die Biegungen (115, 115', 115") eine Höhe von etwa 6,35 mm (1/4 Inch) bis etwa 25,4 mm (1 Inch) aufweisen.

9. Technische Biegekomponente nach Anspruch 1, wobei die Biegungen (115, 115', 115") eine Breite von etwa 3,175 mm (1/8 Inch) bis etwa 25,4 mm (1 Inch) aufweisen.

10. Technische Biegekomponente nach Anspruch 1, wobei die Biegungen (115, 115', 115") prismatisch geformt sind und die folgenden Formen umfassen: quadratische, kreisförmige, dreieckige und andere geometrische Formen.

11. Verfahren zum Verleihen von Dimensionsstabilität an eine technische Biegekomponente, umfassend die folgenden Schritte:
(a) Bereitstellen eines ersten Strukturbauteils (10, 10", 11) mit einer ersten Oberfläche (105, 105", 105');
(b) Einkerben der ersten Oberfläche (105, 105", 105') des ersten Strukturbauteils (10, 10", 11), so dass man eine Anzahl von Rillen (110, 110', 110") bereitstellt, wodurch eine Anzahl prismatischer Biegungen (115, 115', 115") erzeugt wird;
(c) Bereitstellen eines zweiten Strukturbauteils (10', 11) mit einer zweiten Oberfläche (105', 106);
(d) Verbinden der ersten Oberfläche des ersten Strukturbauteils mit der zweiten Oberfläche des zweiten Strukturbauteils, so dass die Anzahl von Biegungen (115, 115") an die zweite Oberfläche (105', 106) grenzt; und
(e) Erzeugen einer Grenzfläche mit erhöhtem Oberflächendruck und reduzierter Reibung.

12. Verfahren nach Anspruch 11, wobei die Biegungen (115, 115") eine Höhe und Breite aufweisen, die durch eine Kombination aus Biegesteifigkeit, Biegeachsensteifigkeit, Biegeverformungssteifigkeit, Biegeknickgrenzen und Lastweg-Handhabungs-Design-Regeln festgelegt werden.

13. Verfahren nach Anspruch 11, wobei der Schritt Einkerben der Oberfläche (105, 105') den Schritt umfasst: Erzeugen einer Anzahl länglicher und paralleler gerader Biegungen (115, 115'), die eine entsprechende Anzahl von Rillen (110, 110') erzeugen, die sich von einem ersten Rand des ersten Strukturbauteils (10, 11) zum gegenüberliegenden Rand davon erstrecken.

14. Verfahren nach Anspruch 11, wobei der Schritt Einkerben der Oberfläche (105") den Schritt umfasst: Erzeugen einer Anzahl von Biegungen, bestehend aus einer Anzahl von prismatischen **stiftförmigen Biegungen** (115"), die eine entsprechende Anzahl von Rillen (110") erzeugen, die in ein schraffierten Anordnung auf der Oberfläche (105") des Strukturbauteils (10") angeordnet sind.

15. Verfahren nach Anspruch 11, wobei der Verbindungsschritt den Schritt umfasst:
Verbinden einer ersten Oberfläche (105) eines Strukturbauteils (10) mit geraden länglichen Biegungen (115), die sich von einem ersten Rand zum gegenüberliegenden Rand davon erstrecken, mit einer zweiten Oberfläche (105') des zweiten Strukturbauteils (11) mit geraden länglichen Biegungen (115'), die sich von einem ersten Rand zum gegenüberliegenden Rand davon in einer rechtwinkligen Anordnung in Bezug auf den anderen erstrecken, und zur Kooperation in gegenseitigem Kontakt.

16. Verfahren nach Anspruch 11, wobei der Verbindungsschritt den Schritt umfasst:
Verbinden einer ersten Oberfläche (105") eines Strukturbauteils (10") mit prismatischen stiftförmigen Biegungen (115"), die sich von einem ersten Rand zum gegenüberliegenden Rand davon erstrecken, mit einer zweiten flachen Oberfläche (106) eines Strukturbauteils (10'), zur Kooperation in gegenseitigem Kontakt.

## Revendications

1. Composant à courbure artificielle comprenant un premier membre structurel plat (10 ; 10") ayant une première surface (105 ; 105") et un second membre structurel plat (11, 10') ayant une seconde surface (105' ; 106) et pour coopérer avec ledit premier membre structurel plat (10 ; 10"), **caractérisé en ce qu'**au moins une desdites première et seconde surfaces (105, 105' ; 105") desdits premier et second membres structurels (10, 10' ; 10", 11) comprend une pluralité de rainures (110, 110', 110") intégralement obtenues dans ces membres, la disposition étant telle que ladite pluralité de rainures (100, 110', 110") crée une pluralité de courbures prismatiques (115, 115', 115") ayant une hauteur et une largeur prédéterminées.

2. Composant à courbure artificielle selon la revendication 1, dans lequel ladite pluralité de rainures (110, 110") sont parallèles les unes par rapport aux autres.

3. Composant à courbure artificielle selon la revendication 1, dans lequel ladite pluralité de rainures (110, 110") traversent complètement ladite première surface (105, 105").

4. Composant à courbure artificielle selon la revendication 1, dans lequel ladite pluralité de courbures consiste en une pluralité de courbures droites allongées (115, 115') s'étendant depuis un premier bord jusqu'au bord opposé dudit membre structurel (10;11).

5. Composant à courbure artificielle selon la revendication 1, dans lequel ladite pluralité de courbures consiste en une pluralité de courbures prismatiques en forme d'aiguilles (115") créant une pluralité respective de rainures (110") arrangées selon une configuration quadrillée sur ladite surface (105") dudit membre structurel (10").

6. Composant à courbure artificielle selon la revendication 1, dans lequel ledit second membre structurel (11) comprend des courbures droites allongées (115') s'étendant depuis un premier bord jusqu'à son bord opposé, la disposition étant telle que ledit premier membre structurel (10) et ledit second membre structurel sont en contact avec ladite pluralité de courbures (115) respectivement dans une configuration perpendiculaire les unes par rapport aux autres afin de coopérer dans un contact mutuel.

7. Composant à courbure artificielle selon la revendication 1, dans lequel ladite seconde surface (106) dudit second membre structurel (10') est une surface lisse sans aucune rainure, la disposition étant telle que ladite première pluralité de courbures (115") dudit premier membre structurel (10") est en contact avec ladite seconde surface (106) dudit second membre structurel (11) respectivement pour coopérer en contact mutuel.

8. Composant à courbure artificielle selon la revendication 1, dans lequel lesdites courbures (115, 115', 115") ont une hauteur comprise entre environ 6,35 mm (1/4 de pouce) et environ 25,4 mm (1 pouce).

9. Composant à courbure artificielle selon la revendication 1, dans lequel lesdites courbures (115, 115', 115") ont une largeur comprise entre environ 3,175 mm (1/8 de pouce) et environ 25,4 mm (1 pouce).

10. Composant à courbure artificielle selon la revendication 1, dans lequel lesdites courbures (115, 115', 115") ont une forme prismatique comprenant les tailles suivantes : carré, cercle, triangle et d'autres formes géométriques.

11. Méthode permettant d'assurer la stabilité dimensionnelle d'un composant à courbure artificielle comprenant les étapes suivantes :
(a) fourniture d'un premier membre structurel (10, 10", 11) ayant une première surface (105, 105", 105') ;
(b) rainurage de ladite première surface (105, 105", 105') dudit premier membre structurel (10, 10", 11) pour produire une pluralité de rainures (110, 110', 110") afin de créer une pluralité de courbures prismatiques (115, 115', 115") ;
(c) fourniture d'un second membre structurel (10', 11) ayant une seconde surface (105', 106) ;
(d) accouplement de ladite première surface dudit premier membre structurel avec ladite seconde surface dudit second membre structurel de telle façon que ladite pluralité de courbures (115, 115") aboute ladite seconde surface (105', 106) ; et
(e) création d'une interface avec une pression de surface accrue et un frottement réduit.

12. Méthode de la revendication 11, selon laquelle lesdites courbures (115, 115") ont une hauteur et une largeur prédéterminées par une combinaison de rigidité à la flexion des courbures, de rigidité axiale des courbures, de rigidité à la torsion des courbures, de limitation du flambage des courbures et de règles de conception de la gestion du chemin de charge.

13. Méthode de la revendication 11, selon laquelle ladite étape consistant à rainurer ladite surface (105, 105') comprend l'action de créer une pluralité de courbures droites allongées et parallèles (115, 115') produisant une pluralité respective de rainures (110, 100') s'étendant depuis un premier bord dudit premier membre structurel (10, 11) jusqu'à son bord opposé.

14. Méthode de la revendication 11, selon laquelle ladite étape consistant à rainurer ladite surface (105") comprend l'action de créer une pluralité de courbures consistant elles-mêmes en une pluralité de courbures prismatiques en forme d'aiguilles (115") créant une pluralité respective de rainures (110") arrangées en une configuration quadrillée sur ladite surface (105") dudit membre structurel (10").

15. Méthode de la revendication 11, selon laquelle ladite étape d'accouplement comprend l'action d'accoupler une première surface (105) d'un membre structurel (10) ayant des courbures droites allongées (115) s'étendant depuis un premier bord jusqu'au bord opposé de celui-ci, à une seconde surface (105') d'un second membre structurel (11) ayant des courbures droites allongées (115') s'étendant depuis un premier bord jusqu'au bord opposé de celui-ci selon une disposition perpendiculaire les unes par rapport aux autres et pour coopérer en contact mutuel.

16. Méthode de la revendication 11, selon laquelle ladite étape d'accouplement comprend l'action d'accoupler une première surface (105") d'un membre structurel (10") ayant des courbures prismatiques en forme d'aiguilles (115") s'étendant depuis un premier bord jusqu'à son bord opposé à une deuxième surface plate (106) d'un membre structurel (10') pour coopérer en contact mutuel.
